# EUROPEAN PATENT SPECIFICATION

(11) **EP 3 415 380 B1**
(45) Date of publication and mention of the grant of the patent: **22.04.2020**
(21) Application number: 17305716.7
(22) Date of filing: 13.06.2017
(51) Int. Cl.: B60S 1/34, B60S 1/38

(54) **WINDSHIELD WIPER ARM HAVING A CAP FOR PROTECTING A FLUID DELIVERY TUBE**
SCHEIBENWISCHERARM MIT KAPPE ZUM SCHUTZ EINES FLÜSSIGKEITSABGABESCHLAUCHS
BRAS D'ESSUIE-GLACE AYANT UN CAPUCHON DE PROTECTION D'UN TUBE DE DISTRIBUTION DE FLUIDE

(43) Date of publication of application: 19.12.2018
(73) Proprietor: Valeo Systèmes d'Essuyage, 78322 Le Mesnil Saint Denis (FR)
(72) Inventor: JARASSON, Jean-Michel, 78322 LE MESNIL SAINT DENIS (FR); CAILLOT, Gérald, 78322 Le Mesnil Saint Denis (FR); IZABEL, Vincent, 78322 Le Mesnil Saint Denis (FR); ROGALA, Andrzej, 32-050 SKAWINA (PL)
(74) Representative: Valeo Systèmes d'Essuyage

(56) References cited:
- EP-A2- 2 505 440
- WO-A1-2012/041907
- DE-A1-102009 048 212
- US-A1- 2011 185 531

## Description

### TECHNICAL FIELD OF THE INVENTION

The present invention relates to a cap for protecting a section of a fluid delivery tube of a windshield wiper arm.

The invention also relates to an arm assembly for a windshield wiper device, and to a windshield wiper arm comprising such an arm assembly.

Document WO 2012/041907 is considered to be the prior art closest to the subject-matter of claim 1.

### TECHNICAL BACKGROUND OF THE INVENTION

A car or an automotive vehicle is traditionally equipped with wipers to clean the external surface of the windscreen or of any other glass component, and to prevent the driver's view of his surroundings being obstructed.

A windscreen wiper generally includes a wiper arm which moves back and forth in an angular manner, and a longitudinally extended wiper blade.

The wiper blade carries a squeegee blade made of a resilient material that rubs against the windscreen external surface and removes water by moving it outside the driver's field of vision.

In a conventional version, the blades are produced in the form of articulated brackets which hold the squeegee blade at a number of discrete locations, giving it a bend that allows it to follow whatever curvature the windscreen may have.

In another and more recent version, known as the "flat blade" version, the blade is in the form of a semi-rigid assembly which holds the squeegee blade along its entire length by virtue of one or more bend-forming vertebrae making it possible to press the blade against the windscreen without having to use brackets.

In both solutions, the blade is attached to the wiper arm by a connection system having a connector and an adapter.

The connector is a piece which is secured to the blade and which is generally fastened directly to the squeegee blade or to the flat structure of the blade, whereas the adapter is interposed between the connector and the arm.

The adapter is an intermediate piece that allows the linking and the fastening of the connector on the wiper arm and which is locked in a terminal piece of the wiper arm by a retractable locking means.

In order to improve the cleaning of the surface, the wiper arm assembly may include at least one fluid delivery tube or hose for distributing and dispersing a windshield washer cleaning fluid.

Such a tube or hose can also deliver a deicing fluid.

The terminal section or free end of the tube or hose is generally connected to a spraying device, supported by the wiper arm, for spraying the fluid on the windshield wiper surface.

Advantageously, in such an arrangement, the liquid is sprayed as closed as possible to the wiper blade.

It is thus necessary to arrange the fluid delivery tube along the windshield wiper arm.

To this end, it is known to design an arm assembly for a windshield wiper arm comprising an arm adapter comprising a distal section for supporting the wiper blade and a proximal section delimiting an internal space, for example formed as a substantially open channel of a U-shaped cross section delimiting an internal space for housing a terminal section of the fluid delivery tube.

To maintain the tube or hose on the arm, it is known to provide one or several clips for fixing it along the rod of the wiper arm.

The aim of the invention is to provide a solution to ensure a good positioning of the tube or hose on the arm and also to protect the hose or tube from any bad handling by the end-user, for example when grabbing the arm-blade connection for dismounting the wiper blade and replacing it with a new wiper blade.

### SUMMARY OF THE INVENTION

To this end, the invention proposes a cap for protecting a section of a fluid delivery tube of a windshield wiper arm, said wiper arm comprising an arm adapter, said protection cap being of an elongated shape and comprising:
- a distal mounting portion configured to cooperate with an internal space of the arm adapter; and
- at least one proximal locking element configured to cooperate with a complementary portion of the arm adapter and / or with a complementary portion of an arm rod of the windshield wiper arm.

According to other aspects of the protection cap:
- the distal mounting portion comprises to transversely opposed lateral mounting tabs that are configured to be received between the internal facing portions of two transversely opposed lateral walls of the arm adapter;
- said transversely opposed lateral mounting tabs are configured to be elastically clamped between the internal facing portions of two transversely opposed lateral walls of the arm adapter;
- each one of said mounting tabs is delimited by a positioning shoulder that is configured to cooperate with a facing portion of a free edge of an associated lateral wall;
- the proximal locking element is an elastically deformable element that is configured to be clamped around a complementary portion of the arm rod;
- said elastically deformable element comprises two transversely opposed clamping jaws;
- the protection cap comprises a curved shaped receiving portion configured to surround a portion of the fluid delivery tube;
- the curved shaped receiving portion is associated with the proximal locking element;
- the distal mounting portion and the proximal locking element are connected by a longitudinal and tunnel shaped intermediary portion.

The invention also proposes an arm assembly for a windshield wiper device, said arm assembly comprising:
- an arm adapter comprising a distal section for supporting a wiper blade, a proximal section delimiting an internal space;
- and a protection cap according to the invention.

In a particular embodiment the arm assembly also comprises an arm rod and a terminal portion of the arm adapter for connecting said arm adapter to said arm rod.

In another embodiment the arm assembly also comprises the tube or hose for providing fluid, said tube is in particular a heated tube.The invention further proposes a windshield wiper arm comprising an arm assembly according to the invention.

### DESCRIPTION OF THE FIGURES

The invention will be better understood and further details, features and advantages of the invention will become apparent from reading the following description given by way of non-limiting example and with reference to the appended drawings, in which:
- figure 1 is a top view of a windscreen wiper, this windscreen wiper having a windscreen wiper blade, a wiper arm for driving the wiper blade including an arm rod and an arm adapter, and a fluid delivery tube;
- figure 2 is a bottom perspective view partially illustrating the arm rod, the arm adapter the fluid delivery tube of figure 1 associated with a spraying device connected to the fluid delivery tube and supported by the arm adapter;
- figure 3 is a bottom perspective view of the arm adapter of figure 2;
- figure 4 is a view that is similar to the one of figure 2 and that illustrates an embodiment of a retention cap for fixedly retaining the terminal section of the fluid delivery tube with respect to the arm adapter;
- figure 5 is a top view of the components illustrated at figure 4;
- figure 6 and 7 are two detailed perspective views of the retention cap of figures 4 and 5;
- figure 8 is a perspective view of the retention cap of figure 6 in association with the terminal section of the fluid delivery tube, both being illustrated in their respective position when the retention cap is fixed on the arm adapter as illustrated at figures 4 and 5;
- figure 9 is a detailed enlarged cross-sectional view, along plane IX-IX of figure 8, of the components of the assembly of figure 8 along a vertical and transversal plane; and
- figure 10 is a detailed enlarged cross-sectional view along the vertical and transversal plane X-X of figure 4, illustrating the components illustrated at figures 4 and 5.

### DETAILED DESCRIPTION

In the following description, identical reference numbers denote identical pieces or pieces having similar functions.

It should be noted that the figures explain the invention in detail for implementing the invention, it being, of course, possible for said figures to serve to better define the invention if necessary.

Furthermore, in the following description, the terms 'longitudinal' or 'lateral' refer to the orientation of the windscreen wiper blade or of the wiper arm according to the invention.

For the purposes of satisfactory comprehension of the invention, the figures may be oriented with reference to the 'X-Y-Z' scheme.

The longitudinal direction corresponds to the main axis (X) of the windscreen wiper blade, while the transverse(Y) and vertical (Z) orientations correspond to concurrent lines, that is, lines which cross the longitudinal direction, notably perpendicular to the longitudinal axis of the windscreen wiper blade.

The longitudinal axis X is oriented from the distal end of the windscreen wiper towards its distal end.

The directions referenced 'upper' or 'lower' correspond to orientations perpendicular to the plane of rotation of the windscreen wiper blade, the term 'lower' being turned towards the plane of the windscreen and the term 'upper' being turned away from this plane.

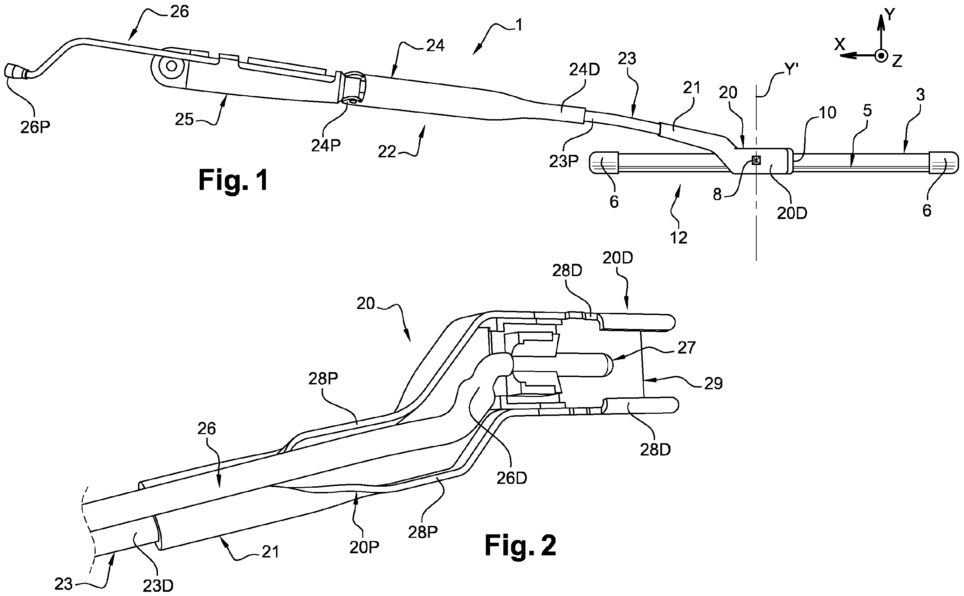

Figure 1 illustrates a windscreen wiper 1 having a windscreen wiper blade 12 and a wiper arm 22 for driving the windscreen wiper blade 12.

The windscreen wiper blade 12 is here of the flat blade type and comprises a longitudinal body 3 oriented substantially in accordance with the longitudinal axis X, a squeegee blade, generally made of rubber or of elastomeric material, and at least one vertebra (not illustrated) that stiffens the squeegee blade and encourages it to press against a vehicle windscreen.

The body 3 of the windscreen wiper blade 12 may comprise an upper aerodynamic deflector 5 intended to improve the operation of the wiping system, the purpose of this deflector being to improve the pressing of the windscreen wiper blade against the windscreen and thus the aerodynamic performance of the windscreen wiper.

The windscreen wiper blade 12 may further comprise end fittings 6 or clips for attaching the squeegee blade and the vertebra to the body 3, these fittings 6 being arranged at each of the longitudinal ends of the body 3.

Substantially at its middle, the windscreen wiper blade 12 comprises, an intermediate connector (not visible); and an adapter element 10 forming an adapter secured to the wiper arm 22 that is mounted on the connector so as to maintain a degree of freedom to pivot about a rotation axis Y' that is a transverse axis parallel to a transverse direction Y substantially perpendicular to the longitudinal axis X of the windscreen wiper blade 12.

This degree of freedom allows the windscreen wiper blade 12 to pivot with respect to the wiper arm 22 and thus allows the windscreen wiper blade 12 to follow the curvature of the windscreen as it moves. The adapter element 10 is for example designed in order to be mounted by translation along with the longitudinal direction X inside a terminal distal piece 20 of the wiper arm 22, from which it may be detached by pressing on a locking button 8.

This terminal piece 20 is the arm adapter in the sense of the invention.

The wiper arm 22 is intended to be driven by a motor to follow an angular back-and-forth movement that allows water and possibly other undesirable elements with which the windscreen is covered to be evacuated.

The adapter element 10 provides for the connection of the windscreen wiper blade 12 to the wiper arm 22 and, in particular, to the arm adapter piece 20 of the wiper arm 22.

The arm adapter 20 comprises a distal section 20D and a proximal section 20P. In the illustrated example, the distal section 20D of the arm adapter 20 forms a yoke having a vertical and transverse section substantially in the form of a reversed U.

The distal section 20D, that accommodates the adapter element 10, has an elongate shape, the axis of elongation of which is generally substantially parallel or coaxial to the longitudinal axis X of the windscreen wiper blade 12. In the remainder of the present description, in a non limiting manner, the axis of elongation of the distal section 20D of the arm adapter 20 will be deemed to correspond to the axis X.

The proximal section 20P has an elongate overall shape and extends substantially parallel to the axis X and that is laterally offset with respect to the longitudinal axis X of the distal section 20D, as it can be seen at figure 1.

Beyond its proximal section 20P, the arm adapter comprises a terminal portion 21 for connecting the arm adapter 20 to a rod of the wiper arm 22 belonging to the rest of the wiper arm 22.

For example, both the rod 23 and the arm adapter are metallic components and the terminal portion 21 is mechanically crimped on the arm rod 23.

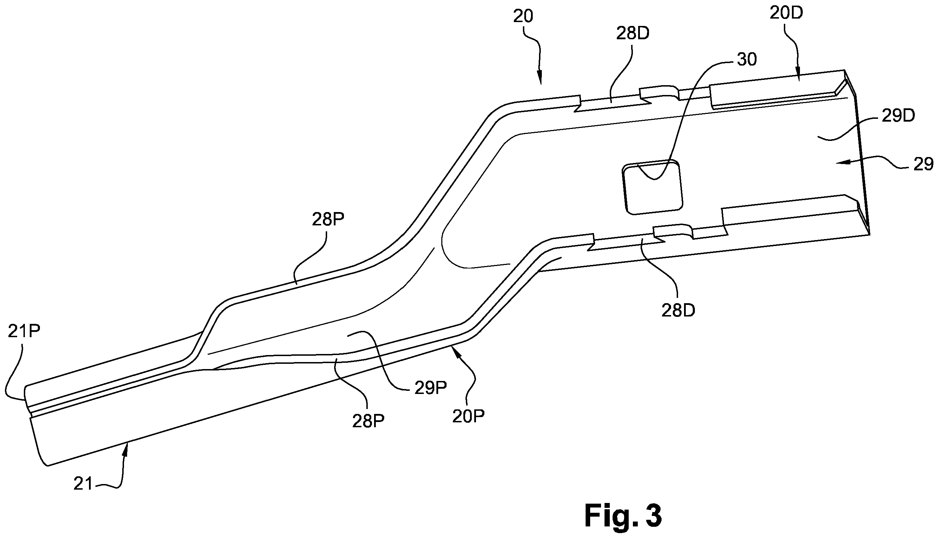

The rest of the wiper arm comprises an arm rod 23 having a terminal distal end 23D that is rigidly fixed to terminal portion 21 of the arm adapter 20 as it can be seen in details at figures 2 and 3.

The proximal end 23P of the arm rod 23 is rigidly fixed to the distal end 24D of a retainer 24. The proximal end 24P of the retainer 24 is supported by and articulated on a mounting and driving pivoting head 25.

The windscreen wiper 1 is equipped with a fluid, for example a windshield cleaning liquid, delivery tube or hose 26 that extends all along the wiper arm.

The delivery tube 26 is a flexible tube, for example made of elastomeric material, that extends from its free proximal end 26P to its free distal end 26D.

The proximal end 26P of the delivery tube 26 is designed to be connected to a complementary component of a non illustrated fluid delivery system.

As it can be seen at figure 2, the distal free end 26D of the delivery tube 26 is designed to be connected to a complementary portion of a spraying nozzle 27 arranged in the interior of the distal section 20D of the arm adapter 20 that accommodates the adapter element 10.

As it can be seen at figure 2, the delivery tube 26 runs along the under face of the arm rod 23 and its terminal section - ending at its distal end 26D - extends inside the terminal space delimited firstly within the proximal section 20P and secondly within the distal section 20D of the arm adapter 20.

With reference to figures 2 and 3, the arm adapter 20 comprises two opposed lateral walls 28 each one having a proximal section 28P and a distal section 28D respectively associated with the proximal and distal portions 20P, 20D of the arm adapter 20.

These two lateral walls are connected together by an upper transverse wall 29 comprising a proximal section 29P and a distal section 29D respectively associated with the proximal and distal portions 20P, 20D of the arm adapter 20.

The distal section 29D of the upper wall 29 comprises a through hole 30 for giving access to the unlocking button 8.

According to the invention, the arm adapter 20 is provided with protection and retention means for cooperating with the terminal section of the fluid delivery tube 26 in the area of the arm adapter 20, and more particularly in the area of its proximal section 20P.

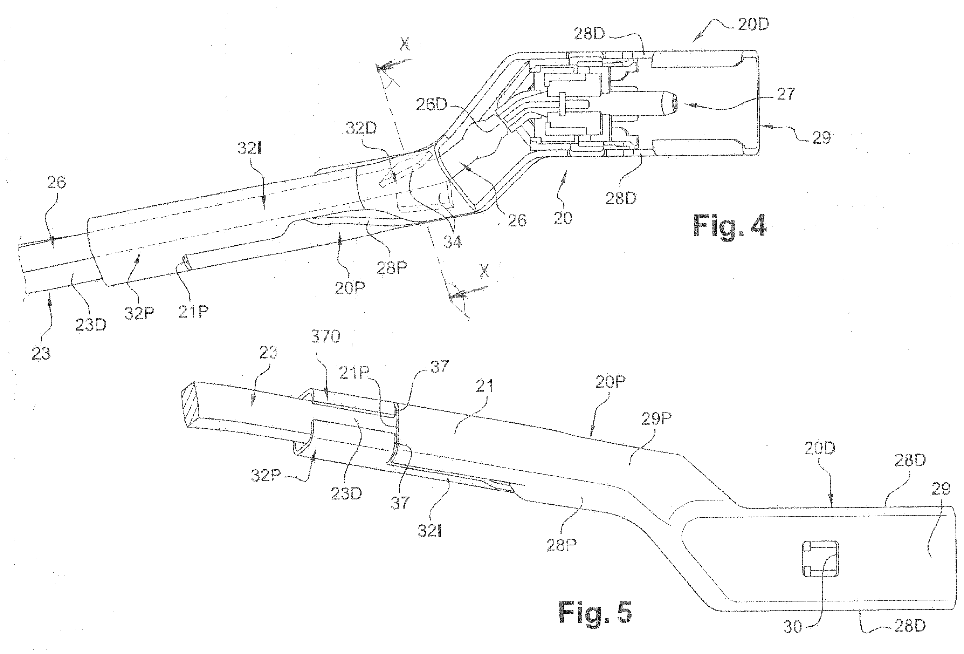

According to the embodiment of the invention illustrated at figures 4 to 10, the wiper arm comprising the arm rod 23 and the arm adapter 20 is provided with a protection cap 32 that is a single piece obtained by plastic molding.

The protection cap 32 has a generally elongate shape extending between a distal mounting portion 32D and a proximal locking element 32P, that are connected by an intermediary longitudinal tunnel shaped intermediary portion 32/.

The concavity of the hollow protection cap 32 is oriented upwardly, especially for the intermediary portion 32/ having a substantially semi-circular cross section.

The distal portion 32D is in a general flared shape of a half "bowl".

The distal mounting portion 32D comprises two transversely opposed lateral mounting tabs 34.

Each mounting tab 34 is of a substantially planar shape that extends vertically and upwardly.

Each mounting tab is delimited laterally by a substantially planar external face 35.

Each tab mounting tab 34 is also delimited vertically by a lower positioning shoulder 36.

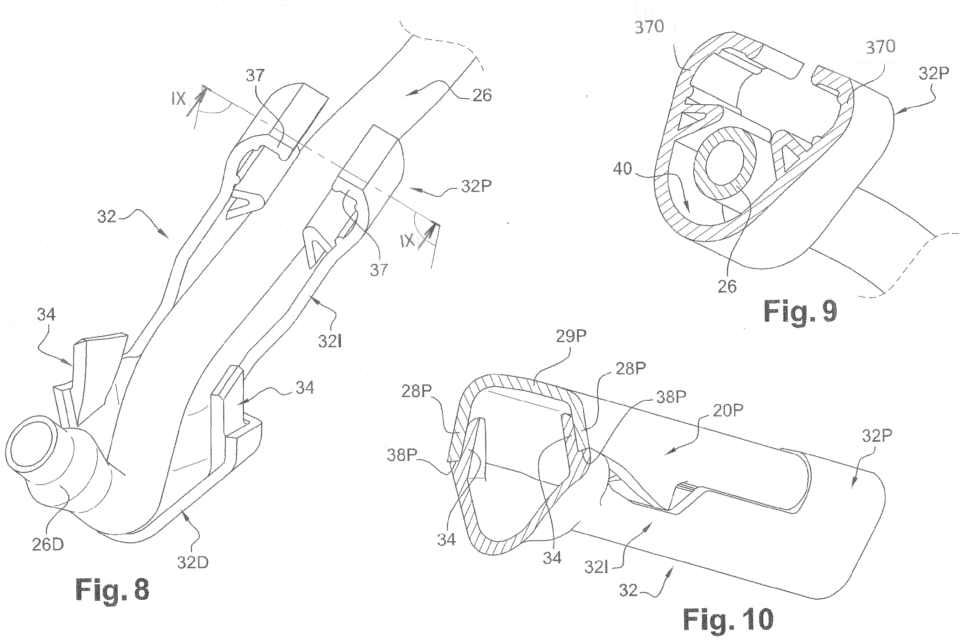

As it can be seen at figures 4 and 10, when the protection cap is mounted on the wiper arm 22, the mounting tabs 34 are dimensioned and configured to cooperate with a facing portion of a lateral wall 28, and here with a facing portion of a proximal section 28P of an associated lateral wall 28.

In this mounted position, each positioning shoulder 36 cooperates with a facing portion of a free lower edge of the associated lateral wall 28, and here with a facing portion of a free lower edge 38P a proximal section 28P of an associated lateral wall 28.

Due to the elasticity of the material and of the design, the two transversely opposed lateral mounting tabs 34 are configured to be elastically clamped between the internal facing portions of the proximal sections 28P of the opposed lateral walls 28.

The proximal locking element 32P is an elastically deformable element that is configured to be clamped around a complementary portion 23D of the arm rod 23.

To this end, the elastically deformable element 32P comprises two transversely opposed upper clamping jaws 370.

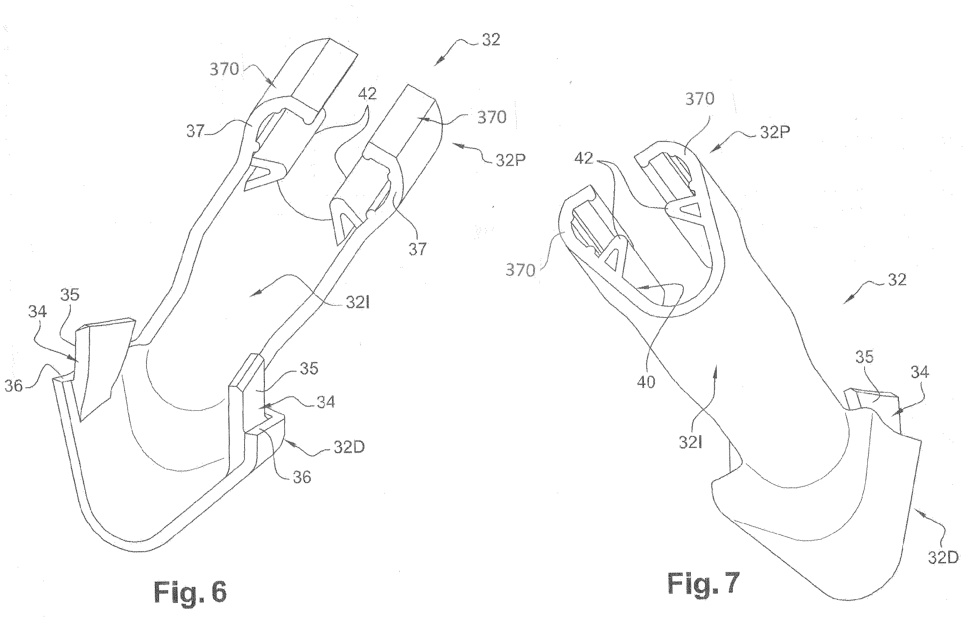

As it can be seen at figures 6 to 9, each clamping jaw 370 is for example in a general shape of a "C", the interior contour of which is substantially complementary to the external shape and contour of the cooperating portion 23D of the arm rod 23.

In a non-illustrated variant, the locking element 32P can be positioned and dimensioned in order to be clamped on the terminal portion 21 for connecting the arm adapter 20 to the rod 23.

Longitudinally in line with the clamping jaws 370, the protection cap 32 comprises a curved shaped receiving portion 40 that is configured to surround a portion of the fluid delivery tube 26 extending longitudinally through this receiving portion as illustrated at figure 10.

The curved shaped receiving portion 40 is open longitudinally and upwardly defining an insertion slot 42 by means ow which the body of the fluid delivery tube 26 can be introduced radially therein.

The curved shaped receiving portion 40 is associated with the proximal upper locking element 32P being molded in a single piece.

As schematically illustrated at figure 8, for the mounting of the protection cap 32 on the wiper arm, the fluid delivery tube 26 is first introduced in the receiving portion 40 and arranged "inside" and along the concave interior of the protection cap, and thereafter this pre-assembly is mounted and locked on the wiper arm 22.

The longitudinal positioning of the protection cap 32 with respect to the arm adapter 20 is in particular ensured by the cooperation of the distal transversal end faces 37 of the clamping jaws 370 with the facing transversal end face 21D of the terminal portion 21 of the arm adapter 20 (See figure 5).

## Claims

1. A cap (32) for protecting a section of a fluid delivery tube (26) of a windshield wiper arm (22), said wiper arm comprising an arm adapter (20), said protection cap (32) being of an elongated shape, **characterised in that** said cap comprises:
- a distal mounting portion (32D) configured to cooperate with an internal space of the arm adapter (20); and
- at least one proximal locking element (32P) configured to cooperate with a complementary portion (21) of the arm adapter (20) and / or with a complementary portion (23D) of an arm rod (23) of the windshield wiper arm (22).

2. A protection cap (32) according to claim 1, wherein the distal mounting portion (32D) comprises two transversely opposed lateral mounting tabs (34) that are configured to be received between the internal facing portions of two transversely opposed lateral walls (28, 28P) of the arm adapter (20, 20P).

3. A protection cap (32) according to claim 2, wherein said transversely opposed lateral mounting tabs (34) are configured to be elastically clamped between the internal facing portions of the transversely opposed lateral walls (28, 28P).

4. A protection cap (32) according to claim 2, wherein each one of said mounting tab (34) is delimited by a positioning shoulder (36) that is configured to cooperate with a facing portion of a free edge (38) of an associated lateral wall (28, 28P).

5. A protection cap (32) according to any of the preceding claims, wherein the proximal locking element (32P) is an elastically deformable element that is configured to be clamped around a complementary portion (23D) of the arm rod (23).

6. A protection cap (32) according to claim 5, wherein said elastically deformable element (32P) comprises two transversely opposed clamping jaws (370).

7. A protection cap (32) according to anyone of the preceding claims that comprises a curved shaped receiving portion (40) configured to surround a portion of the fluid delivery tube (26).

8. A protection cap (32) according to claim 7, wherein the curved shaped receiving portion (40) is associated with the proximal locking element (32P).

9. A protection cap (32) according to any of the preceding claims, wherein the distal mounting portion (32D) and the proximal locking element (32P) are connected by a longitudinal tunnel shaped intermediary portion (321) of the protection cap (32).

10. An arm assembly for a windshield wiper device, said arm assembly comprising:
- an arm adapter (20) comprising a distal section (20D) for supporting a wiper blade (3), a proximal section (20P) delimiting an internal space; and
- a protection cap (32) according to any one of the preceding claims.

11. An arm assembly according to the preceding claim that also comprises an arm rod (23), and a terminal portion (21) of the arm adapter (20) for connecting said arm adapter (20) to said arm rod (23).

12. A windshield wiper arm (1) comprising an arm assembly according to any of the two preceding claim.

## Patentansprüche

1. Kappe (32) zum Schutz eines Abschnitts eines Flüssigkeitsabgabeschlauchs (26) eines Scheibenwischerarmes (22), wobei der Scheibenwischerarm einen Armadapter (20) umfasst, wobei die Schutzkappe (32) von einer länglichen Form ist, **dadurch gekennzeichnet, dass** die Kappe Folgendes umfasst:
- einen distalen Montageabschnitt (32D), dazu ausgelegt, mit einem Innenraum des Armadapters (20) zusammenzuwirken; und
- mindestens ein proximales Verriegelungselement (32P), dazu ausgelegt, mit einem ergänzenden Abschnitt (21) des Armadapters (20) und / oder mit einem ergänzenden Abschnitt (23D) einer Armstange (23) des Scheibenwischerarms (22) zusammenzuwirken.

2. Schutzkappe (32) nach Anspruch 1, wobei der distale Montageabschnitt (32D) zwei schräg gegenüberliegende seitliche Montagelaschen (34) umfasst, die dazu ausgelegt sind, zwischen den inneren, einander zugewandten Abschnitten der zwei schräg gegenüberliegenden seitlichen Wände (28, 28P) des Armadapters (20, 20P) aufgenommen zu werden.

3. Schutzkappe (32) nach Anspruch 2, wobei die schräg gegenüberliegenden seitlichen Montagelaschen (34) dazu ausgelegt sind, zwischen den inneren, einander zugewandten Abschnitten der schräg gegenüberliegenden seitlichen Wände (28, 28P) elastisch festgespannt zu werden.

4. Schutzkappe (32) nach Anspruch 2, wobei eine jede der Montagelaschen (34) durch eine Positionierungsschulter (36) begrenzt ist, die dazu ausgelegt ist, mit einem zugewandten Abschnitt einer freien Kante (38) einer zugeordneten seitlichen Wand (28, 28P) zusammenzuwirken.

5. Schutzkappe (32) nach einem der vorangehenden Ansprüche, wobei das proximale Verriegelungselement (32P) ein elastisch verformbares Element ist, das dazu ausgelegt ist, um einen ergänzenden Abschnitt (23D) der Armstange (23) festgespannt zu werden.

6. Schutzkappe (32) nach Anspruch 5, wobei das elastisch verformbare Element (32P) zwei schräg gegenüberliegende Spannklauen (370) umfasst.

7. Schutzkappe (32) nach einem der vorangehenden Ansprüche, die einen gewölbt geformten Aufnahmeabschnitt (40) umfasst, der dazu ausgelegt ist, einen Abschnitt des Flüssigkeitsabgabeschlauchs (26) zu umgeben.

8. Schutzkappe (32) nach Anspruch 7, wobei der gewölbt geformte Aufnahmeabschnitt (40) dem proximalen Verriegelungselement (32P) zugeordnet ist.

9. Schutzkappe (32) nach einem der vorangehenden Ansprüche, wobei der distale Montageabschnitt (32D) und das proximale Verriegelungselement (32P) durch einen längstunnelartig geformten Zwischenabschnitt (32I) der Schutzkappe (32) verbunden sind.

10. Armanordnung für eine Scheibenwischervorrichtung, wobei die Armanordnung Folgendes umfasst:
- einen Armadapter (20), der einen distalen Abschnitt (20D) zum Stützen eines Wischerblatts (3) umfasst, wobei ein proximaler Abschnitt (20P) einen Innenraum begrenzt; und
- eine Schutzkappe (32) nach einem der vorangehenden Ansprüche.

11. Armanordnung nach einem der vorangehenden Ansprüche, die auch eine Armstange (23) und einen Endabschnitt (21) des Armadapters (20) zum Verbinden des Armadapters (20) mit der Armstange (23) umfasst.

12. Scheibenwischerarm (1), umfassend eine Armanordnung nach einem der zwei vorangehenden Ansprüche.

## Revendications

1. Capuchon (32) pour protéger une section d'un tube de distribution de fluide (26) d'un bras d'essuie-glace (22), ledit bras d'essuie-glace comprenant un adaptateur de bras (20), ledit capuchon de protection (32) étant de forme allongée, **caractérisé en ce que** ledit capuchon comprend :
une partie de montage distale (32D) conçue pour coopérer avec un espace interne de l'adaptateur de bras (20) ; et
au moins un élément de verrouillage proximal (32P) conçu pour coopérer avec une partie complémentaire (21) de l'adaptateur de bras (20) et/ou avec une partie complémentaire (23D) d'une tige de bras (23) du bras d'essuie-glace (22).

2. Capuchon de protection (32) selon la revendication 1, la partie de montage distale (32D) comprenant deux pattes de montage (34) latérales transversalement opposées qui sont conçues pour être reçues entre les parties internes se faisant face de deux parois latérales (28, 28P) transversalement opposées de l'adaptateur de bras (20, 20P).

3. Capuchon de protection (32) selon la revendication 2, lesdites pattes de montage (34) latérales transversalement opposées étant conçues pour être serrées de manière élastique entre les parties internes se faisant face des parois latérales (28, 28P) transversalement opposées.

4. Capuchon de protection (32) selon la revendication 2, chacune desdites pattes de montage (34) étant délimitée par un épaulement de positionnement (36) qui est conçu pour coopérer avec une partie faisant face d'un bord libre (38) d'une paroi latérale (28, 28P) associée.

5. Capuchon de protection (32) selon l'une quelconque des revendications précédentes, l'élément de verrouillage proximal (32P) étant un élément élastiquement déformable qui est conçu pour être serré autour d'une partie complémentaire (23D) de la tige de bras (23).

6. Capuchon de protection (32) selon la revendication 5, ledit élément élastiquement déformable (32P) comprenant deux mâchoires de serrage (370) transversalement opposées.

7. Capuchon de protection (32) selon l'une quelconque des revendications précédentes qui comprend une partie réceptrice (40) de forme courbe conçue pour entourer une partie du tube de distribution de fluide (26).

8. Capuchon de protection (32) selon la revendication 7, la partie réceptrice (40) de forme courbe étant associée à l'élément de verrouillage proximal (32P).

9. Capuchon de protection (32) selon l'une quelconque des revendications précédentes, la partie de montage distale (32D) et l'élément de verrouillage proximal (32P) étant reliés par une partie intermédiaire longitudinale en forme de tunnel (32I) du capuchon de protection (32).

10. Ensemble bras pour un dispositif d'essuie-glace, ledit ensemble bras comprenant :
un adaptateur de bras (20) comprenant une section distale (20D) pour supporter un balai d'essuie-glace (3), une section proximale (20P) délimitant un espace interne ; et
un capuchon de protection (32) selon l'une quelconque des revendications précédentes.

11. Ensemble bras selon la revendication précédente qui comprend également une tige de bras (23), et une partie terminale (21) de l'adaptateur de bras (20) pour relier ledit adaptateur de bras (20) à ladite tige de bras (23).

12. Bras d'essuie-glace (1) comprenant un ensemble bras selon l'une quelconque des deux revendications précédentes.
